# EUROPÄISCHE PATENTSCHRIFT

(11) **EP 1 375 989 B1**
(45) Veröffentlichungstag und Bekanntmachung des Hinweises auf die Patenterteilung: **17.08.2005**
(21) Anmeldenummer: 03450134.6
(22) Anmeldetag: 28.05.2003
(51) Int. Cl.: F16K 31/00

(54) **Piezoelektrisches Ventil**
Piezoelectric valve
Soupape piézoélectrique

(30) Priorität: 18.06.2002 AT 9172002
(43) Veröffentlichungstag der Anmeldung: 02.01.2004
(73) Patentinhaber: Hoerbiger Automatisierungstechnik Holding GmbH, 86972 Altenstadt (DE)
(72) Erfinder: Strasser, Günther, 82409 Wildsteig (DE); Dörfler, Erich, 86899 Landsberg-Erpfting (DE); Russ, Bernhard, 86971 Peiting (DE); Teltscher, Rainer, 83666 Waakirchen (DE)
(74) Vertreter: Laminger, Norbert, Mag.

(56) Entgegenhaltungen:
- EP-A- 0 922 893
- DE-A- 19 547 149
- DE-A- 19 720 849

## Beschreibung

Die Erfindung betrifft ein Ventil mit einem auslenkbaren Betätigungselement, welches die Bewegungen zumindest eines eigentlichen Dichtelementes zum Öffnen bzw. Schließen steuert, wobei das Betätigungselement durch ein elastisches Element im wesentlichen senkrecht zur Auslenkrichtung beaufschlagt ist, wobei die Längsachse des Betätigungselementes und die durch das elastische Element ausgeübte Kraft in einer Position des Betätigungselementes zwischen seinen beiden Extrempositionen fluchten, bzw. ein Ventil mit einem auslenkbaren Betätigungselement, welches die Bewegungen zumindest eines eigentlichen Dichtelementes zum Öffnen bzw. Schließen steuert, wobei ein elastisches Element im wesentlichen senkrecht zur Auslenkrichtung des Betätigungselementes wirkt und die Längsachse des Betätigungselementes und die durch das elastische Element ausgeübte Kraft im wesentlichen fluchten.

Bei vielen Arten von Ventilen ist das Dichtelement oder ein dieses Dichtelement bewegendes Betätigungselement in eine der beiden Richtungen mittels beispielsweise elastischer Elemente vorgespannt. Die Vorspannung kann eventuell auch durch die Kräfte hervorgerufen werden, die bei der Auslenkung des Dicht- oder Betätigungselementes entstehen. Meist wird dadurch aber auch die Schaltdynamik des Ventils zumindest in eine Richtung nachteilig beeinflußt und viel Leistungsaufnahme des Ventils wird für die Überwindung dieser Vorspannung benötigt.

Andererseits sind auch Ventilkonstruktionen bekannt, bei welchen durch die Geometrie des Dicht- oder Betätigungselementes - allenfalls unter Zuhilfenahme von zumindest einem Federelement - die beiden Endlagen durch Vorspannung stabil gehalten sind, während zum Umschalten die Kraft eines elastischen Elementes überwunden werden muß, wobei nach Durchlaufen eines ersten Abschnittes des gesamten Arbeitshubes das elastische Element das weitere Umschalten unterstützt. Ein Beispiel für ein derartiges Ventil ist in der DE 197 20 849 A1 beschrieben, wo zum Umschalten zwei Aktoren vorgesehen sind, die auf das Trägerelement für das eigentliche Dichtelement einwirken.

Die Aufgabe der Erfindung ist ein mit geringen Strömen elektrisch schaltbares Ventil, welches sich besonders durch kleine Baugröße auszeichnet, dennoch aber große Stellwege realisieren läßt.

Zur Lösung dieser Aufgabe ist erfindungsgemäß vorgesehen, daß das Betätigungselement als einseitig eingespannter piezoelektrischer Biegewandler ausgeführt ist. Diese an sich bekannten Biegewandler bieten durch ihre bei geringer Ansteuerleistung doch sehr hohe Kraftdichte und gute Schaltdynamik alle Voraussetzungen für großen Hub bei geringsten Dimensionen. Zusammen mit der Unterstützung der Umschaltens durch das elastische Element, welches seine größte Kraft in der neutralen Stellung des Biegewandlers ausübt und bei zunehmender Auslenkung und damit abnehmender Auslenkkraft des Biegewandlers ebenfalls geringere Kraft ausübt, kann der volle Leerlaufhub des Biegewandlers genutzt und der erzielbare Hub - womit wieder bei Ventilen eine Erhöhung der Durchflußleistung einher geht - wesentlich vergrößert werden.

Vorteilhafterweise kann zumindest eines der eigentlichen Dichtelemente am Biegewandler montiert oder darin integriert sein.

Durch die Möglichkeit, mit dem piezoelektrischen Biegewandler drei stabile Schaltzustände realisieren zu können, kann eine Vielzahl von Ventil-Varianten dann bereitgestellt werden, wenn zwei Dichtelemente auf einander entgegengesetzten Seiten des Biegewandlers montiert oder integriert sind, welche Dichtelemente mit zwei einander gegenüberliegenden Ventilsitzen zusammenwirken.

Gegenüber der ersten Variante sind höhere Dichtkräfte mit einer Konstruktion erzielbar, bei welcher zwar gleichfalls ein elastisches Element im wesentlichen senkrecht zur Auslenkrichtung des Betätigungselementes wirkt und die Längsachse des Betätigungselementes und die durch das elastische Element ausgeübte Kraft im wesentlichen fluchten, bei der aber erfindungsgemäß das Betätigungselement als einseitig eingespannter piezoelektrischer Biegewandler ausgeführt ist, und das Dichtelement durch ein elastisches Element im wesentlichen senkrecht zur Auslenkrichtung des Betätigungselementes beaufschlagt ist. Auch hier kann der Biegewandler mit seiner vollen Auslenkung betrieben werden und über die geometrischen Verhältnisse können die Dichtkraft, der Arbeitshub des Dichtelementes und dgl. an die Anforderungen in der Praxis angepaßt werden.

Vorzugsweise ist dabei das Dichtelement um eine Achse verschwenkbar gelagert, die vorzugsweise seitlich neben dem Ventilsitz angeordnet ist.

Die vom Biegewandler ausübbare Kraft kann am günstigsten zur Geltung gebracht werden, wenn der Angriffspunkt des Biegewandlers am Dichtelement außerhalb der durch die Achse und den Ventilsitz definierten Ebene liegt.

Dabei ist vorteilhafterweise gemäß einem weiteren Erfindungsmerkmal vorgesehen, daß der Angriffspunkt des elastischen Elementes am Dichtelement außerhalb der durch die Achse und den Ventilsitz definierten Ebene liegt, vorzugsweise mit dem Angriffspunkt des Biegewandlers am Dichtelement eine zur durch Achse und Ventilsitz definierten Ebene im wesentlichen parallelen Ebene definiert.

Eine höhere Variabilität kann mit einer Ausführungsvariante der Erfindung erreicht werden, bei welcher das Dichtelement mit zwei Ventilsitzen auf einander bezüglich der Schwenkachse gegenüberliegenden Seiten zusammenwirkt, wobei es vorzugsweise durch das elastische Element auf einen der beiden Ventilsitze vorgespannt ist und durch den Biegewandler zwischen den beiden Schaltstellungen umschaltbar ist.

Die Rückstellkraft des Biegewandlers kann optimal für das Schalten des Ventils genutzt werden, wenn gemäß einem weiteren Merkmal der Erfindung das Dichtelement eine Vertiefung aufweist, in welche ein Ende des Biegewandlers eingreift.

Die erweiterte Anwendbarkeit der erfindungsgemäßen Ventilkonstruktion kann ebenfalls durch eine Ausführungsform sichergestellt werden, bei der zwei Dichtelemente vorgesehen sind, welche unabhängig voneinander in entgegengesetztem Sinn um jeweils eine Achse verschwenkbar gelagert sind, welche Achse jeweils seitlich neben dem Ventilsitz angeordnet ist.

Auch hier kann allenfalls eine vorteilhafte Weiterbildung vorgesehen sein, bei der jedes Dichtelement mit zwei Ventilsitzen auf einander bezüglich seiner Schwenkachse gegenüberliegenden Seiten zusammenwirkt, wobei jedes Dichtelement vorzugsweise durch das elastische Element auf einen der beiden Ventilsitze vorgespannt ist und durch den Biegewandler zwischen den beiden Schaltstellungen umgeschaltbar ist.

Auch hier können die Rückstellkräfte aus beiden Auslenkungsstellungen des Biegewandlers genutzt werden, wenn die beiden Dichtelemente im Grundzustand miteinander eine auf den Biegewandler hin offene Vertiefung ausbilden, in welche ein Ende des Biegewandlers eingreift.

Die Anwendbarkeit und Vielseitigkeit des Ventils kann weiters gesteigert werden, in dem in das Ventil ein Drucksensor integriert ist.

Dabei kann vorteilhafterweise auch die den Biegewandler ansteuernde Regelelektronik in das Ventil integriert und auch mit dem Drucksensor verbunden sein.

Auch ist es dabei von Vorteil, wenn die Regelelektronik mit einem externen Eingang für ein Sollwertsignal ausgestattet ist.

In der nachfolgenden Beschreibung soll die Erfindung anhand der in den beigefügten Zeichnungen dargestellten Ausführungsbeispiele näher erläutert werden.

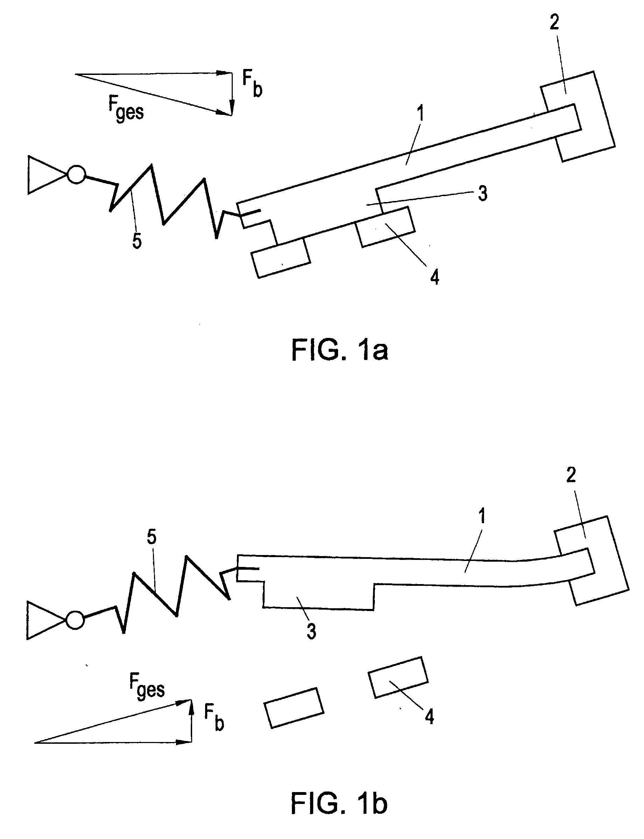

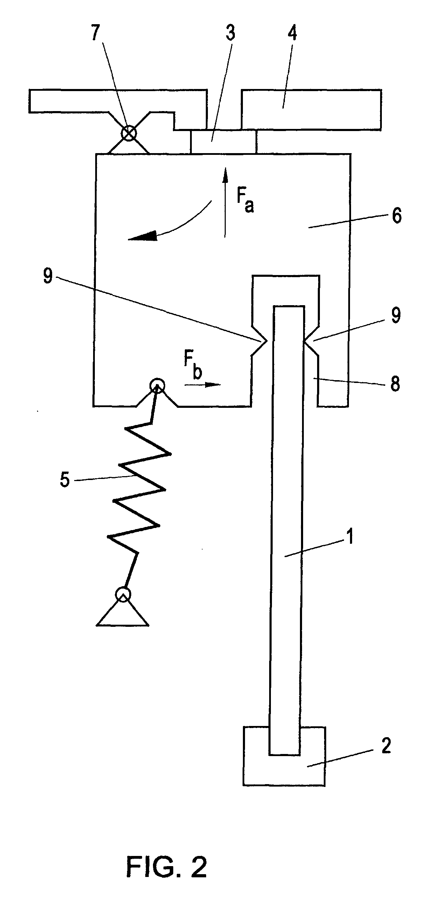

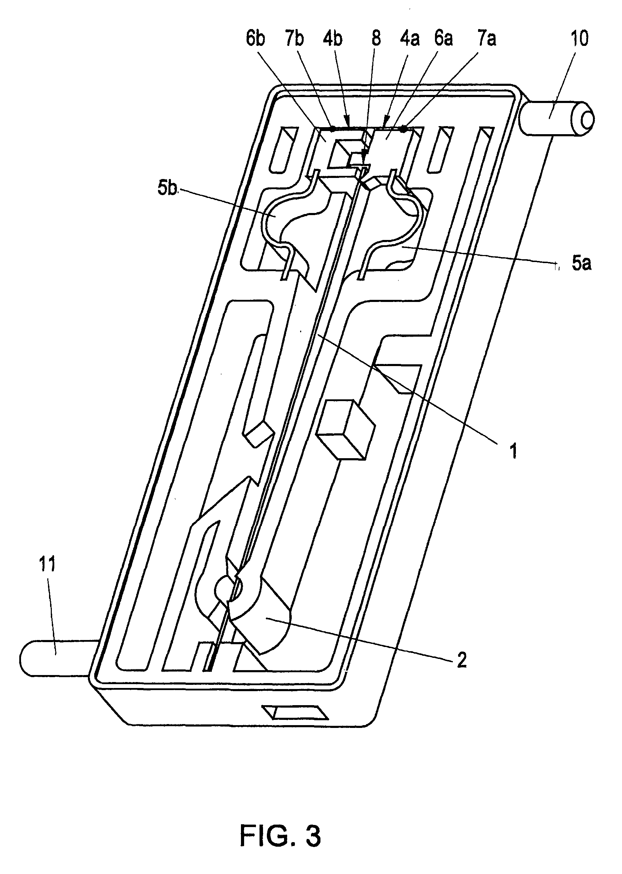

Die Fig. 1a zeigt in schematischer Darstellung einen piezoelektrischen Biegewandler für ein erfindungsgemäßes Ventil im Zusammenwirken mit einer Druckfeder und dem Ventilsitz in geschlossener Stellung und Fig. 1b zeigt diesen Biegewandler in Offenstellung, die Fig. 2 ist eine schematische Darstellung eines Biegewandlers für die zweite erfindungsgemäße Ventilvariante mit verschwenkbarem Dichtelement in Schließstellung, und Fig. 3 ist eine perspektivische Ansicht eines 3/3-Wege-Ventils gemäß der zweiten Ventilvariante mit zwei Dichtelementen mit Biegewandler als gemeinsamem Betätigungselement.

Ein piezoelektrischer Biegewandler 1 ist an einem Ende in einer Einspannstelle 2 im Gehäuse des Ventils oder einer damit verbundenen Struktur gehalten. In der in Fig. 1a dargestellten Ruhelage, in der keine Spannung angelegt ist, drückt der Biegewandler 1 ein Dichtelement 3 auf den Ventilsitz 4. Die Schließkraft ist durch die mechanischen Eigenschaften des Biegewandlers 1 und zusätzlich durch die Wirkung der Druckfeder 5 gegeben, die mit dem Biegewandler 1 im wesentlichen fluchtend angeordnet ist, bzw. nur einen stumpfen Winkel nahe 180° mit diesem einschließt, deren größere Kraftkomponente also im wesentlichen in Längsrichtung des Biegewandlers 1 und somit im wesentlichen senkrecht zu dessen Auslenkrichtung wirkt. Die Kraft in der Ruhelage ist durch den in Auslenkrich ung wirkenden Anteil Fb der Federkraft Fges bestimmt.

Bei Anlegen einer Spannung wird der Biegewandler 1 in schließlich die in Fig. 1b dargestellte Endstellung ausgelenkt, wobei im Zuge dieser Bewegung der in Auslenkrichtung wirkende Federkraftanteil Fb abnimmt, bis er ganz verschwindet, wenn Druckfeder 5 und Biegewandler 1 in einer Zwischenstellung vollständig fluchtend ausgerichtet sind. Bei weiterer Auslenkung des Biegewandlers 1, wenn die Druckfeder 5 wieder einen stumpfen Winkel nahe 180° mit dem Biegewandler 1 einschließt, der aber zur entgegengesetzten Seite in bezug auf die Stellung der Fig. 1a weist, unterstützt dann der nun in Auslenkrichtung wirkende Federkraftanteil Fb die weitere Auslenkung des Biegewandlers 1 in die offene Endstellung. Vorteilhafterweise ist die maximale Auslenkposition symmetrisch zur Ruhelage, damit beim Ausschalten der Spannung der Biegewandler 1 durch seine Elastizität genügend Rückstellkraft besitzt, um den in Auslenkrichtung und in Öffnungsrichtung wirkenden Federkraftanteil Fb zu überwinden.

Bei der zweiten Ventilvariante, wie sie in Fig. 2 dargestellt ist, wirkt der Biegewandler auf ein separates Dichtelement 6 ein, das um eine meist neben dem Ventilsitz 4 liegende Achse 7 schwenkbar ist. Am Dichtelement 6 ist die eigentliche Dichtfläche 3 ausgearbeitet oder befestigt. Die Druckfeder 5 wirkt bei dieser Ausführungsform nicht unmittelbar auf den Biegewandler 1 ein, sondern wirkt, im wesentlichen parallel zum Biegewandler 1 liegend, in Richtung auf den Ventilsitz 4 auf das Dichtelement 6 ein. Aufgrund des geringen Winkels, den die Druckfeder 5 mit dem Biegewandler 1 einschließt, wirkt wiederum ein geringer Anteil der Federkraft als Federkraftanteil Fb in Auslenkrichtung des Biegewandlers 1 und wirkt dessen Auslenkung bei angelegter Spannung entgegen. Von diesem Federkraftanteil Fb ist bei der zweiten Ventilvariante die Schließkraft Fa, die im wesentlichen der Kraft Fges der Druckfeder 5 entspricht und dem senkrecht auf die Biegewandlerauslenkung wirkenden Anteil der Federkraft Fges entspricht, entkoppelt, so dass sie auch wesentlich höher ausgelegt werden kann als bei herkömmlichen Systemen und auch bei der oben zuerst beschriebenen Variante. Mit dieser erhöhten Dichtkraft, kann das Ventil entweder in einem höheren Druckbereich arbeiten oder aber durch eine Vergrößerung des Durchmessers des Ventilsitzes 4 kann der Durchfluß wesentlich erhöht werden.

Beim Auslenken des Biegewandlers 1 durch Anlegen einer Spannung nimmt - gleich wie in der ersten Variante - die Kraft Fb, gegen die der Biegewandler 1 arbeiten muß, mit zunehmder Auslenkung ab und kehrt sich dann sogar um, sodaß auch hier der Biegewandler 1 mit seiner vollen Auslenkung betrieben werden kann. Da das freie Ende des Biegewandlers 1 in eine Ausnehmung 8 in Art einer Tasche im Dichtelement 6 eingreift, kann bei Ausschalten der Spannung das Dichtelement 6 durch den Biegewandler 1 wieder - entgegen dem Federkraftanteil Fb - über den Gleichgewichtspunkt in die Schließstellung zurückgebracht werden.

Die Reibung in den Drehlagern 7 des Dichtelementes 6 und an den Angriffspunkten der Druckfeder 5, die - wie in Fig. 3 dargestellt - auch als Blechbiegeteil ausgebildet sein kann, am Dichtelement 6 kann durch Ausbildung dieser Drehlager 7 bzw. Angriffspunkte am Dichtelement 6 als Schneidkanten vermindert werden. Die Reibung zwischen Biegewandler 1 und Dichtelement 6 kann ebenfalls über Schneidkanten 9 oder durch anderweitig Minimierung der Oberflächenrauhigkeit zumindest eines der Bauteile 1, 6, vorzugsweise beider Bauteile, vermindert werden. Dies kann beispielsweise auch durch Aufschieben einer Kappe mit minimaler Oberflächenrauhigkeit auf den Biegewandler 1 geschehen.

Die Ventile beider Varianten sind in ihrer einfachsten Ausführungsform mit einem Ventilsitz 4 und damit als 2/2-Wegeventile dargestellt. Auf der dem Dichtelement 3 der Fig. 1 bezüglich des Biegewandlers 1 und auf der dem Ventilsitz 4 bezüglich der Drehachse 7 gegenüberliegenden Seite in Fig. 2 kann jedoch in einer weiteren Ausführungsform beider Varianten ein weiterer Ventilsitz vorgesehen sein, in letzterem Fall vorzugsweise in einer um 90° gegenüber dem ersten Ventilsitz 4 gedrehten Ebene, im wesentlichen parallel zum Biegewandler 1. Damit sind 3/2-Wegeventile mit piezoelektrischer Betätigung realisierbar.

Mit nur einem piezoelektrischen Biegewandler 1 ist aber auch ein 3/3-Wegeventil zu realisieren, wobei ein bevorzugtes Ausführungsbeispiel in Fig. 3 dargestellt ist. Es wird dabei ein in einer Einspannstelle 2 im Gehäuse gehaltener Biegewandler 1 verwendet, der um seine Ruhelage in beide Richtungen ausgelenkt werden kann, beispielsweise durch Anlegen von Spannung mit unterschiedlichem Vorzeichen. Bei Auslenkung beispielsweise nach rechts in Fig. 3 wird ein Dichtelement 6a - im wesentlichen wie zuvor beschrieben - um eine im wesentlichen dem Angriffspunkt der Feder 5a gegenüberliegende Achse 7a ausgelenkt und der Durchgang durch einen ersten Ventilsitz 4a geöffnet, an dem beispielsweise über den Anschluß 10 Druckluft aus einer Druckluftversorgungsquellen ansteht und nach Öffnen des Dichtelementes 6a durch das Ventilgehäuse zu einem Verbraucheranschluß 11 am Ventil und von dort weiter zum Verbraucher gelangt. Dabei ist wesentlich, dass die Tasche 8 im Dichtelement 6a nur in ausgelenkter Position wirksam ist, während sie eine Bewegung des Biegewandlers 1 in die der oben erläuterten Auslenkung entgegengesetzte Richtung nicht behindern darf. Das zweite Dichtelement 6b bleibt dabei, durch die Feder 5b beaufschlagt, in Schließstellung.

Bei Auslenkung in die Gegenrichtung, d.h. in Fig. 3 nach links, wird nämlich das zweite Dichtelement 6b bewegt und damit ein zweiter, hier parallel zum ersten Ventilsitz 4a liegender Ventilsitz 4b geöffnet. Damit kann beispielsweise die Verbindung vom Verbraucheranschluß 11 zu einer Entlüftung (nicht dargestellt) hergestellt werden. In diesem Zustand des Ventils wird das erste Ventilelement 6a durch die Feder 5a in der Schließstellung gehalten.

Die beiden Dichtelemente 6a, 6b bilden in ihrer geschlossenen Stellung miteinander eine Tasche 8, in welche das auslenkbare Ende des Biegewandlers 1 eingreift.

Durch die Verwendung eines einzigen Biegewandlers 1 für zwei Ventilsitze wird eine sehr kompakte Ausführung eines 3/3-Wegeventils realisiert. Auch hier wäre eine Erweiterung mit zwei Dichtsitzen für jedes Dichtelement 6a, 6b denkbar.

Vorteilhafterweise können zusätzliche Bauteile in Ventilgehäuse integriert sein, etwa einen Sensor, der den Druck mißt. Hier wird ein Standardsensor verwendet. Die Möglichkeiten gehen von einem gehäusten Sensor bis hin zur nackten Sensorzelle, die auf eine ventilspezifischen Platine montiert wird (in Analogie zur Mikroelektronik als "Chip-On-Board"). Dazu kann in das Ventilgehäuse eine Elektronik-Platine integriert sein, die in der einfachsten Stufe nur einen Drucksensor tragen und die Verbindung des Biegewandlers und des Drucksensors zu einer Schnittsteller (Stecker) gewährleisten soll. Dann wird das Ventil (incl. Drucksensor) über ein Kabel mit einer elektronische Steuerung / Regelung verbunden. Diese Regelungselektronik kann dann den Druck am Verbraucher regeln. Die Regelelektronik könnte aber auch miniaturisiert ins das Ventil mit eingebaut werden. Das Ventil stellt dann einen autarken Druckregler dar, der mit einer Versorgungsspannung und einem Signal (Sollwert) beaufschlagt werden muß und einen geregelten Druck ausgibt.

## Patentansprüche

1. Ventil mit einem auslenkbaren Betätigungselement (1), welches die Bewegungen zumindest eines eigentlichen Dichtelementes (3) zum Öffnen bzw. Schließen steuert, wobei das Betätigungselement durch ein elastisches Element (5) im wesentlichen senkrecht zur Auslenkrichtung beaufschlagt ist, wobei die Längsachse des Betätigungselementes und die durch das elastische Element ausgeübte Kraft in einer Position des Betätigungselementes zwischen seinen beiden Extrempositionen fluchten, **dadurch gekennzeichnet, daß** das Betätigungselement (1) als einseitig eingespannter piezoelektrischer Biegewandler ausgeführt ist.

2. Ventil nach Anspruch 1, **dadurch gekennzeichnet, daß** zumindest eines der eigentlichen Dichtelemente (3) am Biegewandler (1) montiert oder darin integriert ist.

3. Ventil nach Anspruch 2, **dadurch gekennzeichnet, daß** zwei Dichtelemente (3) auf einander entgegengesetzten Seiten des Biegewandlers (1) montiert oder integriert sind, welche Dichtelemente mit zwei einander gegenüberliegenden Ventilsitzen (4) zusammenwirken.

4. Ventil mit einem auslenkbaren Betätigungselement (1), welches die Bewegungen zumindest eines eigentlichen Dichtelementes (6) zum Öffnen bzw. Schließen steuert, wobei ein elastisches Element (5) im wesentlichen senkrecht zur Auslenkrichtung des Betätigungselementes (1) wirkt und die Längsachse des Betätigungselementes und die durch das elastische Element ausgeübte Kraft im wesentlichen fluchten, **dadurch gekennzeichnet, daß** das Betätigungselement (1) als einseitig eingespannter piezoelektrischer Biegewandler ausgeführt ist, und das Dichtelement (6) durch das elastische Element (5) im wesentlichen senkrecht zur Auslenkrichtung des Betätigungselementes (1) beaufschlagt ist.

5. Ventil nach Anspruch 4, **dadurch gekennzeichnet, daß** das Dichtelement (6) um eine Achse (7) verschwenkbar gelagert ist, die vorzugsweise seitlich neben dem Ventilsitz (4) angeordnet ist.

6. Ventil nach Anspruch 5, **dadurch gekennzeichnet, daß** der Angriffspunkt des Biegewandlers (1) am Dichtelement (6) außerhalb der durch die Achse (7) und den Ventilsitz (4) definierten Ebene liegt.

7. Ventil nach Anspruch 6, **dadurch gekennzeichnet, daß** der Angriffspunkt des elastischen Elementes (5) am Dichtelement (6) außerhalb der durch die Achse (7) und den Ventilsitz (4) definierten Ebene liegt, vorzugsweise mit dem Angriffspunkt des Biegewandlers (1) am Dichtelement (6) eine zur durch Achse (7) und Ventilsitz (4) definierten Ebene im wesentlichen parallelen Ebene definiert.

8. Ventil nach einem der Ansprüche 5 bis 7, **dadurch gekennzeichnet, daß** das Dichtelement (6) mit zwei Ventilsitzen (4) auf einander bezüglich der Schwenkachse (7) gegenüberliegenden Seiten zusammenwirkt, wobei es vorzugsweise durch das elastische Element (5) auf einen der beiden Ventilsitze (4) vorgespannt ist und durch den Biegewandler (1) zwischen den beiden Schaltstellungen umschaltbar ist.

9. Ventil nach einem der Ansprüche 4 bis 8, **dadurch gekennzeichnet, daß** das Dichtelement (2) eine Vertiefung (8) aufweist, in welche ein Ende des Biegewandlers (1) eingreift.

10. Ventil nach einem der Ansprüche 4 bis 7, **dadurch gekennzeichnet, daß** zwei Dichtelemente (6a, 6b) vorgesehen sind, welche unabhängig voneinander in entgegengesetztem Sinn um jeweils eine Achse (7a, 7b) verschwenkbar gelagert sind, welche Achse jeweils seitlich neben dem Ventilsitz (4a, 4b) angeordnet ist.

11. Ventil nach Anspruch 10, **dadurch gekennzeichnet, dass** jedes Dichtelement (6a, 6b) mit zwei Ventilsitzen auf einander bezüglich seiner Schwenkachse (7a, 7b) gegenüberliegenden Seiten zusammenwirkt, wobei jedes Dichtelement vorzugsweise durch das elastische Element (5) auf einen der beiden Ventilsitze vorgespannt ist und durch den Biegewandler (1) zwischen den beiden Schaltstellungen umgeschaltbar ist.

12. Ventil nach Anspruch 10 oder 11, **dadurch gekennzeichnet, daß** die beiden Dichtelemente (6a, 6b) im Grundzustand miteinander eine auf den Biegewandler (1) hin offene Vertiefung (8) ausbilden, in welche ein Ende des Biegewandlers (1) eingreift.

13. Ventil nach einem der vorhergehenden Ansprüche, **gekennzeichnet durch** einen in das Ventil integrierten Drucksensor.

14. Ventil nach Anspruch 13, **dadurch gekennzeichnet, daß** auch die den Biegewandler (1) ansteuernde Regelelektronik in das Ventil integriert und auch mit dem Drucksensor verbunden ist.

15. Ventil nach Anspruch 14, **dadurch gekennzeichnet, daß** die Regelelektronik mit einem externen Eingang für ein Sollwertsignal ausgestattet ist.

## Claims

1. Valve with a displaceable actuating element (1) which controls the movements of at least one actual sealing element (3) for opening and closing, the actuating element being loaded by an elastic element (5) essentially perpendicularly to the direction of displacement, the longitudinal axis of the actuating element and the force exerted by the elastic element being aligned in a position of the actuating element between its two extreme positions, **characterised in that** the actuating element (1) is embodied as a unilaterally constrained piezoelectric bending transducer.

2. Valve according to Claim 1, **characterised in that** at least one of the actual sealing elements (3) is mounted on or integrated in the bending transducer (1).

3. Valve according to Claim 2, **characterised in that** two sealing elements (3) are mounted or integrated on mutually opposite sides of the bending transducer (1), which sealing elements cooperate with two mutually opposite valve seats (4).

4. Valve with a displaceable actuating element (1) which controls the movements of at least one actual sealing element (6) for opening and closing, an elastic element (5) acting essentially perpendicularly to the direction of displacement of the actuating element (1), and the longitudinal axis of the actuating element and the force exerted by the elastic element being essentially aligned, **characterised in that** the actuating element (1) is embodied as a unilaterally constrained piezoelectric bending transducer and the sealing element (6) is loaded by the elastic element (5) essentially perpendicularly to the direction of displacement of the actuating element (1).

5. Valve according to Claim 4, **characterised in that** the sealing element (6) is mounted so as to be pivotable about an axis (7) which is preferably arranged laterally next to the valve seat (4).

6. Valve according to Claim 5, **characterised in that** the point of application of the bending transducer (1) on the sealing element (6) lies outside the plane defined by the axis (7) and the valve seat (4).

7. Valve according to Claim 6, **characterised in that** the point of application of the elastic element (5) on the sealing element (6) lies outside the plane defined by the axis (7) and the valve seat (4), preferably defining with the point of application of the bending transducer (1) on the sealing element (6) a plane essentially parallel to the plane defined by the axis (7) and the valve seat (4).

8. Valve according to one of Claims 5 to 7, **characterised in that** the sealing element (6) cooperates with two valve seats (4) on sides mutually opposite relative to the pivoting axis (7), the sealing element preferably being prestressed by the elastic element (5) onto one of the two valve seats (4) and being able to be switched over between the two switching positions by the bending transducer (1).

9. Valve according to one of Claims 4 to 8, **characterised in that** the sealing element (2) has a recess (8), in which one end of the bending transducer (1) engages.

10. Valve according to one of Claims 4 to 7, **characterised in that** two sealing elements (6a, 6b) are provided which are mounted so as to be pivotable independently of each other in opposite directions about a respective axis (7a, 7b), which axis is arranged, respectively, laterally next to the valve seat (4a, 4b).

11. Valve according to Claim 10, **characterised in that** each sealing element (6a, 6b) cooperates with two valve seats on sides mutually opposite relative to its pivot axis (7a, 7b), each sealing element preferably being prestressed by the elastic element (5) onto one of the two valve seats and being able to be switched over between the two switching positions by the bending transducer (1).

12. Valve according to Claim 10 or 11, **characterised in that**, in the normal state, the two sealing elements (6a, 6b) together form a recess (8) which is open towards the bending transducer (1) and in which one end of the bending transducer (1) engages.

13. Valve according to one of the preceding claims, **characterised by** a pressure sensor integrated in the valve.

14. Valve according to Claim 13, **characterised in that** the control electronics which drive the bending transducer (1) are also integrated in the valve and also connected to the pressure sensor.

15. Valve according to Claim 14, **characterised in that** the control electronics are equipped with an external input for a desired-value signal.

## Revendications

1. Soupape comportant un élément d'actionnement pouvant être dévié, qui commande les déplacements d'au moins un élément d'étanchéité proprement dit (3) pour l'ouverture et la fermeture, dans lequel l'élément d'actionnement est chargé par un élément élastique (5) sensiblement perpendiculairement à la direction de déviation, et dans lequel l'axe longitudinal de l'élément d'actionnement et la force appliquée par l'élément élastique sont alignés dans une position de l'élément d'actionnement entre ses deux positions extrêmes, **caractérisée en ce que** l'élément d'actionnement (1) est agencé sous la forme d'un transducteur de flexion piézoélectrique serré unilatéralement.

2. Soupape selon la revendication 1, **caractérisée en ce qu'**au moins l'un des éléments d'étanchéité proprement dits (3) est monté sur le transducteur de flexion (1) ou il est intégré dans ce dernier.

3. Soupape selon la revendication 2, **caractérisée en ce que** deux éléments d'étanchéité (3) sont montés dans ou intégrés sur des côtés réciproquement opposés du transducteur de flexion (1), lesquels éléments d'étanchéité coopèrent avec deux sièges de soupape (4) à l'opposé l'un de l'autre.

4. Soupape comportant un élément d'actionnement (1) pouvant être dévié, qui commande les déplacements d'au moins un élément d'étanchéité proprement dit (6) pour l'ouverture ou la fermeture, dans laquelle un élément élastique (5) agit sensiblement perpendiculairement à la direction de déplacement de l'élément d'actionnement (1) et l'axe longitudinal de l'élément d'actionnement et la force appliquée par l'élément élastique sont sensiblement alignés, **caractérisée en ce que** l'élément d'actionnement (1) est agencé sous la forme d'un transducteur de flexion piézoélectrique serré unilatéralement et que l'élément d'étanchéité (6) est chargé par l'élément élastique (5) sensiblement perpendiculairement à la direction de déviation de l'élément d'actionnement (1).

5. Soupape selon la revendication 4, **caractérisée en ce que** l'élément d'étanchéité (6) est monté de manière à pouvoir pivoter autour d'un axe (7) qui est disposé de préférence latéralement à côté du siège de soupape (4).

6. Soupape selon la revendication 5, **caractérisée en ce que** le point d'attaque du transducteur de flexion (1) sur l'élément d'étanchéité (6) se situe à l'extérieur du plan défini par l'axe (7) et le siège de soupape (4).

7. Soupape selon la revendication 6, **caractérisée en ce que** le point d'attaque de l'élément élastique (5) sur l'élément d'étanchéité (6) se situe de préférence à l'extérieur du plan défini par l'axe (7) et le siège de soupape (4), et définit de préférence avec le point d'attaque du transducteur de flexion (1) sur l'élément d'étanchéité (6) un plan sensiblement parallèle au plan défini par l'axe (7) et le siège de soupape (4).

8. Soupape selon l'une des revendications 5 à 7, **caractérisée en ce que** l'élément d'étanchéité (6) coopère avec deux sièges de soupape (4) sur des côtés réciproquement opposés par rapport à l'axe de pivotement (7), et de préférence l'élément d'étanchéité précontraint par l'élément élastique (5) sur l'un des deux sièges de soupape (7) peut être commuté par le transducteur de flexion (1) entre les deux positions de commutation.

9. Soupape selon l'une des revendications 4 à 8, **caractérisée en ce que** l'élément d'étanchéité (2) comporte un renfoncement (8) dans lequel s'engage une extrémité du transducteur de flexion (1).

10. Soupape selon l'une des revendications 4 à 7, **caractérisée en ce qu'**il est prévu deux éléments d'étanchéité (6a, 6b) qui sont montés de manière à pouvoir pivoter indépendamment l'un de l'autre en des sens opposés respectivement autour d'un axe (7a, 7b), lequel axe est disposé respectivement latéralement à côté du siège de soupape (4a, 4b).

11. Soupape selon la revendication 10, **caractérisée en ce que** chaque élément d'étanchéité (6a, 6b) coopère avec deux sièges de soupape sur des côtés réciproquement opposés par rapport à l'axe de pivotement (7a, 7b), chaque élément d'étanchéité étant précontraint de préférence par l'élément élastique (5) sur l'un des deux sièges de soupape et étant commutable par le transducteur de flexion (1) entre les deux positions de commutation.

12. Soupape selon la revendication 10 ou 11, **caractérisée en ce que** les deux éléments d'étanchéité (6a, 6b) forment entre eux, dans l'état de base, un renfoncement (8) qui est ouvert en direction du transducteur de flexion (1) et dans lequel s'engage une extrémité du transducteur de flexion (1).

13. Soupape selon l'une des revendications précédentes, **caractérisée par** un capteur de pression intégrée dans la soupape.

14. Soupape selon la revendication 13, **caractérisée en ce que** l'unité électronique de régulation, qui commande le transducteur de flexion (1), est également intégrée dans la soupape et est également reliée au capteur de pression.

15. Soupape selon la revendication 14, **caractérisée en ce que** l'unité électronique de réglage est équipée d'une entrée externe pour un signal de valeur de consigne.
